(19) Europäisches Patentamt / European Patent Office / Office européen des brevets

(11) **EP 4 145 253 A1**

(12) **DEMANDE DE BREVET EUROPEEN**

(43) Date de publication:
**08.03.2023 Bulletin 2023/10**

(21) Numéro de dépôt: **22193237.9**

(22) Date de dépôt: **31.08.2022**

(51) Classification Internationale des Brevets (IPC):
**G06F 3/01** *(2006.01)*  **G06F 3/04842** *(2022.01)*
**G06F 3/04895** *(2022.01)*

(52) Classification Coopérative des Brevets (CPC):
**G06F 3/013; G06F 3/04842; G06F 3/04895;
G06F 9/453**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **06.09.2021 FR 2109308**

(71) Demandeur: **Orange
92130 Issy-les-Moulineaux (FR)**

(72) Inventeurs:
• **LAURENT, Sonia
92326 CHATILLON (FR)**
• **LE TROQUER, Mickael
92326 CHATILLON (FR)**

(74) Mandataire: **Vidon Brevets & Stratégie
16B, rue de Jouanet
BP 90333
35703 Rennes Cedex 7 (FR)**

(54) **PROCÉDÉ D ANALYSE DE L ACTIVITÉ D'UN UTILISATEUR D'UN TERMINAL ÉLECTRONIQUE**

(57) L'invention se rapporte à un procédé d'analyse de l'activité d'un utilisateur d'un terminal électronique. Selon la technique proposée, le procédé comprend :
- une obtention (11) de caractéristiques contextuelles (CC1, CC2, CC3, CC4, CC5) associées à au moins une zone parmi une pluralité de zones d'affichage d'au moins un écran du terminal électronique, en fonction de données d'utilisation dudit terminal comprenant des données relatives à une direction de regard, des données relatives à une activité système dudit terminal et/ou des données fournies en entrée dudit terminal ;
- une détermination (12) d'au moins un indicateur d'activité (IA1, IA2, IA3, IA4) sur ladite zone, en fonction desdites caractéristiques contextuelles associées à ladite zone.

Fig. 1

## Description

### Domaine technique

L'invention se situe dans le domaine des terminaux électroniques aptes à exécuter une pluralité d'applications. Plus particulièrement, l'invention se rapporte aux techniques permettant par exemple la mise en œuvre de systèmes d'assistance intelligents, aptes à accompagner un utilisateur lors d'une utilisation d'un terminal électronique.

### Art antérieur

Les terminaux électroniques (ordinateurs, smartphone, tablette, etc.) peuvent disposer d'écrans de plus en plus grands, et de capacités de calcul leur permettant d'exécuter simultanément de plus en plus d'applications.
Dans ce contexte, des systèmes d'assistance trouvent toute leur pertinence : il s'agit de proposer, par exemple via un mécanisme de notifications affichées à l'écran, de l'aide ou des suggestions à un utilisateur d'un terminal électronique, eu égard à une utilisation courante du terminal électronique (par exemple pour aider l'utilisateur qui semble confronter à une difficulté d'utilisation d'une application, lui proposer une automatisation d'une tâche répétitive, la complétion et la rédaction automatique de réponses à des courriers électroniques, etc.).
Les systèmes d'assistance actuels sont cependant le plus souvent intrinsèques aux applications, c'est-à-dire qu'une application intègre son propre mécanisme d'assistance, différent de celui d'une autre application. Ceci peut conduire à un manque de cohérence, et à des disparités importantes entre les notifications proposées par différentes applications (en termes de volume, d'utilité, etc.).
Des systèmes d'assistance dits transverses - c'est-à-dire non propres à une application particulière donnée - ont été proposés pour remédier à ces inconvénients. Cependant, ces systèmes d'assistance transverses existants proposent parfois une assistance inadaptée, et restent perfectibles.
Quel que soit le système mis en œuvre, il en résulte souvent la réception d'un trop grand nombre de notifications inappropriées ou inadaptées aux besoins de l'utilisateur, avec le risque d'une surcharge d'informations inutiles susceptible de le lasser ou de lui faire perdre son temps. L'effet obtenu est donc inverse à celui recherché, et potentiellement contre-productif.
Il existe donc un besoin pour une solution permettant d'améliorer les systèmes d'assistance existants.

### Résumé de l'invention

La présente technique permet de proposer une solution visant à remédier à certains inconvénients de l'art antérieur. La présente technique se rapporte en effet à un procédé d'analyse de l'activité d'un utilisateur d'un terminal électronique. Un tel procédé comprend :

- une obtention de caractéristiques contextuelles associées à au moins une zone parmi une pluralité de zones d'affichage d'au moins un écran d'un terminal électronique, en fonction de données d'utilisation dudit terminal comprenant des données relatives à une direction de regard, des données relatives à une activité système dudit terminal et/ou des données fournies en entrée dudit terminal ;
- une détermination d'au moins un indicateur d'activité sur ladite zone, en fonction desdites caractéristiques contextuelles associées à ladite zone.

Dans un mode de réalisation particulier de la technique proposée, lesdites données d'utilisation du terminal sont délivrées par des sondes logicielles et/ou matérielles comprenant au moins une sonde de détection d'une direction de regard, une sonde d'analyse de l'activité système dudit terminal, et/ou une sonde de scrutation d'au moins un périphérique d'entrée associé audit terminal.
Dans un mode de réalisation particulier de la technique proposée, lesdites caractéristiques contextuelles associées à la zone appartiennent au groupe comprenant :

- des informations relatives à une durée pendant laquelle un regard est dirigé vers ladite zone ;
- des informations relatives à un nombre de fois où le regard est dirigé vers ladite zone ;
- des informations relatives à un type d'application associé à une fenêtre applicative affichée au moins partiellement dans ladite zone ;
- des informations représentatives d'un état fixe ou changeant d'un contenu affiché dans ladite zone, indépendamment d'une action sur une interface utilisateur dudit terminal ;
- des informations représentatives d'une interaction ou d'une absence d'interaction avec un contenu affiché dans ladite zone ;

- des informations représentatives d'un type d'interaction effectué sur ladite zone.

Dans un mode de réalisation particulier de la technique proposée, ledit au moins un indicateur d'activité comprend au moins :

- un indicateur de productivité au sein de ladite zone, représentatif d'un niveau de production de contenu au sein de ladite zone ;
- un indicateur d'attention pour ladite zone, représentatif d'un niveau d'intérêt vis-à-vis d'un contenu affiché dans ladite zone ;
- un indicateur de complexité de ladite zone, représentatif d'un niveau d'incompréhension, de difficulté rencontrée, et/ou de confusion vis-à-vis d'un contenu affiché dans ladite zone ;
- un indicateur d'introspection associé à ladite zone, représentatif d'un niveau de fatigue et/ou de réflexion vis-à-vis d'un contenu affiché dans ladite zone.

Dans un mode de réalisation particulier de la technique proposée, la détermination d'un indicateur d'activité comprend l'affectation de scores auxdites caractéristiques contextuelles, et tient compte de coefficients de pondération desdits scores.

Dans un mode de réalisation particulier de la technique proposée, la détermination d'au moins un indicateur d'activité est mise en œuvre suite à la détection d'au moins un évènement appartenant au groupe comprenant :

- une ouverture, une fermeture, un redimensionnement et/ou un déplacement d'une fenêtre applicative au niveau de ladite zone ;
- une durée durant laquelle le regard est dirigé vers ladite zone pendant un premier intervalle de temps ;
- un nombre de retour du regard vers ladite zone pendant un deuxième intervalle de temps.

Dans un mode de réalisation particulier de la technique proposée, ledit au moins un indicateur d'activité déterminé pour ladite zone est stocké au sein d'une structure de donnée, pour obtenir un historique dudit indicateur d'activité associé à ladite zone.

Dans un mode de réalisation particulier de la technique proposée, ledit au moins un indicateur d'activité déterminé est en outre associé, dans ladite structure de données ou dans une autre structure de données, à un type d'application et/ou à un fichier correspondant au contenu d'une fenêtre applicative affichée au moins partiellement dans ladite zone au moment de ladite détermination.

Dans un mode de réalisation particulier de la technique proposée, ladite pluralité de zones d'affichage forme une partition dudit écran.

Dans un mode de réalisation particulier de la technique proposée, ledit écran est de forme sensiblement rectangulaire, et les zones de ladite pluralité de zones d'affichage correspondent à un quadrillage dudit écran.

Dans un mode de réalisation particulier de la technique proposée, les zones de ladite pluralité de zones d'affichage correspondent aux intersections entre des lignes de hauteur sensiblement équivalente et des colonnes de largeur sensiblement équivalente découpant ledit écran.

Dans un mode de réalisation particulier de la technique proposée, ladite obtention d'un ensemble de caractéristiques contextuelles et ladite détermination d'au moins un indicateur d'activité sont mises en œuvre pour toutes les zones de ladite pluralité de zones d'affichage.

Selon un autre aspect, la technique proposée se rapporte également à un dispositif électronique comprenant :

- des moyen d'obtention d'un ensemble de caractéristiques contextuelles associées à au moins une zone parmi une pluralité de zones d'affichage d'un écran d'un terminal électronique, en fonction de données d'utilisation dudit terminal comprenant des données relatives à une direction de regard, des données relatives à une activité système dudit terminal et/ou des données fournies en entrée dudit terminal ;
- des moyens de détermination d'au moins un indicateur d'activité sur ladite zone, en fonction desdites caractéristiques contextuelles associées à ladite zone.

Les moyens dudit dispositif électronique peuvent être adaptés à la mise en œuvre l'un quelconque des modes de réalisation du procédé de la présente demande.

Selon un autre aspect, la technique proposée se rapporte également à un produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé d'analyse de l'activité d'un utilisateur d'un terminal électronique tel que décrit précédemment, lorsqu'il est exécuté sur un ordinateur.

La technique proposée vise également un support d'enregistrement lisible par un ordinateur sur lequel est enregistré un programme d'ordinateur comprenant des instructions de code de programme pour l'exécution des étapes du procédé tel que décrit précédemment, dans l'un quelconque de ses modes de réalisation.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par exemple le réseau Internet.

Les différents modes de réalisation mentionnés ci-dessus sont combinables entre eux pour la mise en œuvre de l'invention.

## Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

[Fig 1] illustre les principales étapes du procédé d'analyse de l'activité d'un utilisateur d'un terminal électronique, dans un mode de réalisation particulier de la technique proposée ;

[Fig 2a] présente un exemple de division de l'écran d'un terminal en une pluralité de zones d'affichage, permettant d'illustrer un exemple d'application du procédé de la figure 1 ;

[Fig 2b] présente un exemple de matrice d'indicateurs d'activité obtenu à l'issue d'un exemple d'application du procédé de la figure 1 ;

[Fig 3] décrit une architecture simplifiée d'un dispositif électronique pour la mise en œuvre de la technique proposée, dans un mode de réalisation particulier.

## Description détaillée de l'invention

La présente demande permet de remédier à au moins certains des inconvénients précités.

La technique proposée se rapporte à un procédé d'analyse de l'activité d'un utilisateur d'un terminal électronique (e.g. un ordinateur personnel fixe ou portable, une tablette numérique, un smartphone, etc.), et vise notamment à créer un socle commun que des services (internes au terminal ou tiers) peuvent ensuite exploiter pour proposer diverses fonctionnalités, et notamment des assistants intelligents aptes à fournir des informations tenant compte d'un contexte de l'utilisateur. Par exemple, comme cela est montré par la suite, il est proposé de prendre en compte une dimension spatiale, c'est-à-dire de procéder à une analyse localisée de l'utilisation d'un terminal électronique, différenciée par zones d'affichage de l'écran du terminal. Ainsi, on ouvre par exemple la voie à une amélioration des systèmes d'assistance transverses existants, qui proposent parfois une assistance inadaptée car ne prenant pas suffisamment en compte la zone de l'écran qui fait l'objet d'une activité ou d'une attention particulière de l'utilisateur.

Dans le cadre de la présente technique, le terminal électronique peut comprendre un écran permettant d'afficher des informations délivrées par exemple par le système d'exploitation du terminal électronique ou bien par des applications exécutées sur le terminal électronique. Les informations affichées par le système d'exploitation du terminal électronique comprennent par exemple un fond d'écran, des informations système, des notifications diverses, etc. Les informations qui résultent de l'exécution d'une application sont généralement présentées dans une fenêtre applicative qui, selon le type de terminal électronique et/ou au choix de l'utilisateur, peut être affichée en mode plein écran (l'interface de l'application utilisée occupe la totalité ou la quasi-totalité de la surface disponible sur l'écran, par exemple parce que le terminal électronique n'autorise pas le multifenêtrage) ou non. Bien qu'il ne soit pas limité à ce mode de réalisation, le procédé proposé est particulièrement adapté pour être mis en œuvre sur un terminal électronique permettant le multifenêtrage, c'est-à-dire l'affichage simultané de plusieurs fenêtres applicatives sur l'écran du terminal. Il convient à ce titre de noter que la taille de plus en plus grande des écrans embarqués dans les terminaux électroniques, alliée à la puissance de calcul toujours plus importante de ces terminaux, font que le multifenêtrage est de plus en plus répandu, et qu'il n'est plus l'apanage des ordinateurs personnels. Il est ainsi disponible sur de nombreux terminaux électroniques aux écrans de taille plus modeste, tels que les smartphones ou les tablettes numériques par exemple.

Sur toutes les figures du présent document, les éléments et étapes identiques sont désignés par une même référence numérique.

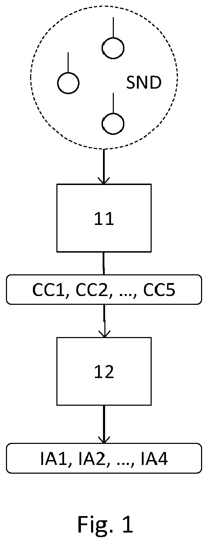

On présente maintenant, en relation avec la figure 1, le principe général du procédé d'analyse selon la technique proposée, dans un mode de réalisation décrit à titre d'exemple et non limitatif. Ce procédé est mis en œuvre par un dispositif électronique qui peut être intégré ou non au terminal électronique de l'utilisateur, comme décrit par la suite.

Dans une étape 11, le dispositif électronique obtient un ensemble de caractéristiques contextuelles associées à au moins une zone parmi une pluralité de zones d'affichage d'au moins un écran couplé au terminal électronique en cours d'utilisation.

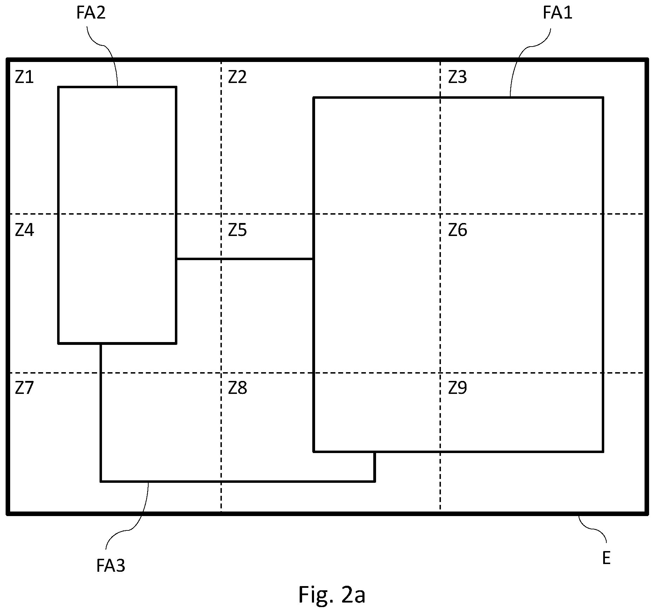

Dans un mode de réalisation de la présente technique, la pluralité de zones d'affichage mentionnée précédemment correspond à une division, virtuelle, par le dispositif électronique, de l'ensemble d'une surface d'affichage associée au terminal électronique. En d'autres termes, la pluralité de zones d'affichage forme une partition de la surface d'affichage. Cette surface d'affichage peut par exemple correspondre à la surface d'affichage d'un écran unique intégré ou couplé au terminal électronique, ou encore à la surface d'un affichage étendu sur plusieurs écrans intégrés ou couplés au terminal électronique (dans le cas où les surfaces d'affichage de plusieurs écrans physiques sont utilisées pour former un seul écran logique). Dans le cas classique ou l'écran est de forme rectangulaire ou sensiblement rectangulaire (un écran incurvé mais de projection rectangulaire sur un plan étant considéré, dans le cadre de la présente technique, comme un écran de forme rectangulaire), ces zones d'affichages correspondent par exemple à un quadrillage de l'écran. Un tel quadrillage peut être régulier, auquel cas les zones de la pluralité de zones d'affichage correspondent aux intersections entre des lignes de hauteur sensiblement équivalente et des colonnes de largeur sensiblement équivalente découpant l'écran d'affichage. Toutes les zones d'affichage ont ainsi des dimensions sensiblement équivalentes. La figure 2a illustre comment l'écran E d'un terminal électronique peut par exemple être virtuellement divisé en 9 zones d'affichage Z1 à Z9 de tailles sensiblement identiques. Cet exemple est volontairement simplifié pour faciliter la compréhension de la technique proposée, étant entendu que l'écran du terminal électronique peut en pratique être divisé en un nombre beaucoup plus important de zones. Par exemple, un écran de résolution 1920 pixels par 1080 pixels peut être divisé virtuellement en 200 zones rectangulaires de tailles identiques de 96 pixels par 108 pixels (découpage en 20 de la largeur de 1820 pixels, et en 10 de la hauteur de 1080 pixels). D'autres manières de découper un écran en une pluralité de zones d'affichage, autre qu'un découpage en zone rectangulaire ou en zones de tailles identiques, sont cependant envisageables dans le cadre de la présente technique (par exemple, un découpage en zones de dimensions variées, dont les dimensions résultent par exemple d'un découpage par fenêtre applicative ou à tout le moins tenant compte des applications générant des portions d'affichage considérées, ou encore un découpage par type d'informations affiché).

Les caractéristiques contextuelles obtenues en étape 11 sont fonction de données d'utilisation du terminal, qui comprennent par exemple des données relatives à la direction du regard de l'utilisateur du terminal électronique, des données relatives à une activité système du terminal électronique (e.g. des informations système délivrées par exemple par le système d'exploitation du terminal électronique, et des informations applicatives délivrées par exemple par des applications exécutées sur le terminal électronique), et/ou des données fournies en entrée du terminal par l'utilisateur.

Selon la technique proposée, ces données d'utilisation sont remontées par des sondes logicielles et/ou matérielles, certaines pouvant prendre la forme notamment de modules logiciels éventuellement couplés à des capteurs. Ces sondes sont configurées pour détecter des évènements et délivrer des informations relatives à l'utilisation courante (i.e. en cours) du terminal électronique par un utilisateur.

De telles sondes comprennent par exemple :

- au moins une sonde de détection de la direction du regard de l'utilisateur ;
- au moins une sonde d'analyse de l'activité système dudit terminal ;
- au moins une sonde de scrutation d'au moins un périphérique d'entrée associé au terminal.

Au moins une sonde de détection de la direction du regard de l'utilisateur peut intégrer ou être couplée à une caméra qui délivre des images du visage de l'utilisateur en train d'utiliser le terminal électronique. Cette sonde peut analyser aux moins certaines de ces images en temps-réel, de manière à déterminer, via des techniques classiques d'oculométrie (« *eye-tracking* » en anglais) où se porte le regard de l'utilisateur à au moins un instant, et plus particulièrement, sur quelle zone de l'écran du terminal électronique.

Au moins une sonde d'analyse de l'activité système du terminal électronique peut par exemple prendre la forme d'une interface de programmation applicative (API) mise à disposition par le système d'exploitation du terminal électronique. Cette sonde peut par exemple fournir des informations sur certains évènements système (affichage de notifications, interface réseau utilisée, débit réseau, etc.). Elle peut par ailleurs fournir des informations relatives à des applications en cours d'exécution sur le terminal, telles que le nom et/ou le type de certaines applications exécutées, le nom de contenus ouverts dans ces applications (e.g. nom de fichier, nom de vidéos ou de musique en cours de lecture, adresse ou URL d'un site internet en cours de consultation, etc.), une taille, une position et/ou un rang d'affichage de fenêtres applicatives liées à l'exécution de ces applications, etc. Les informations de position et de taille peuvent par exemple permettre de faire correspondre des pixels de l'écran à l'aire d'une fenêtre applicative, et plus particulièrement aux(s) zone(s) de la pluralité de zones d'affichages où elle s'étend. Dans le cas où la fenêtre applicative est de forme rectangulaire, ces informations peuvent comprendre par exemple les coordonnées d'un point (par exemple celles de l'angle supérieur gauche de la fenêtre rectangulaire) et un couple de dimensions (hauteur, largeur) de la fenêtre applicative (en nombre de pixels par exemple). Ainsi, de retour sur l'exemple de la figure 2a, il peut être possible de déterminer que la fenêtre applicative FA1 d'une première application s'étend sur les zones Z2, Z3, Z5, Z6, Z8, et Z9 de l'écran E du terminal électronique, que la fenêtre applicative FA2 d'une deuxième application s'étend sur les zones Z1 et Z4 de l'écran E, et que la fenêtre applicative FA3 d'une troisième application s'étend sur les zones Z4, Z5, Z7, et Z8 de l'écran E. La présente technique n'est cependant pas limitée aux fenêtres applicatives de forme rectangulaire. Le rang d'affichage, aussi appelé « valeur d'ordonnancement », indique par exemple qu'une fenêtre applicative est affichée au premier plan ou en arrière-plan, derrière une ou plusieurs autres fenêtres (par exemple, la fenêtre applicative FA3 est partiellement masquée par les fenêtres applicatives FA1 et FA2).

Au moins une sonde d'analyse de l'activité système du terminal électronique peut par exemple être apte à fournir des informations relatives à certains évènements liés au multifenêtrage telles que par exemple des informations représentatives :

- d'une ouverture d'au moins une nouvelle fenêtre applicative (comprenant des informations sur la position, la taille et le rang d'affichage de la nouvelle fenêtre applicative) ;
- d'une fermeture d'au moins une fenêtre applicative ;
- d'un redimensionnement et/ou d'un déplacement d'au moins une fenêtre applicative (comprenant des informations sur la nouvelle position et/ou la nouvelle taille et/ou le nouveau rang d'affichage de la fenêtre applicative).

Au moins une sonde de scrutation des périphériques d'entrée associés au terminal électronique peut délivrer des données relatives aux dispositifs de saisie et/ou de pointage intégrés ou connectés au terminal électronique (e.g. clavier physique, écran tactile, souris, pavé tactile, etc.). Ainsi, cette sonde peut permettre par exemple de connaître les caractères saisis par un utilisateur sur un clavier, la position en temps-réel à l'écran d'un curseur associé à un dispositif de pointage (et donc la zone d'affichage dans laquelle il se situe), mais aussi de détecter des événements tels que la réalisation de clics ou l'utilisation de fonctionnalité de défilement vertical et/ou horizontal (« scroll »), etc. Une telle sonde de scrutation peut par exemple prendre la forme d'une interface de programmation applicative (API) mise à disposition par le système d'exploitation du terminal électronique.

Selon certains modes de réalisation de la technique proposée, les caractéristiques contextuelles obtenues sur la base des données d'utilisation fournies par ces sondes comprennent par exemple, pour la zone considérée parmi la pluralité de zones d'affichage de l'écran du terminal électronique :

- des informations CC1 relatives à au moins une durée pendant laquelle le regard de l'utilisateur est resté dirigé vers ladite au moins une zone et/ou à un nombre de fois où le regard de l'utilisateur s'est dirigé vers ladite au moins une zone : par exemple, il peut être possible, au moyen de la sonde de détection du regard, de détecter que le regard de l'utilisateur est revenu plus de 7 fois sur une zone (après l'avoir quittée) durant les 5 dernières minutes écoulées, et qu'il est resté plus de 3 minutes (en temps cumulé) sur cette zone durant ce laps de temps ;
- des informations CC2 relatives à au moins un type d'application associé à au moins une fenêtre applicative affichée au moins partiellement dans ladite au moins une zone : par exemple, il peut être possible, au moyen de la sonde d'activité système, de détecter que la zone considérée est actuellement occupée majoritairement par un logiciel d'édition de texte ;
- des informations CC3 représentatives d'au moins un état fixe ou changeant d'un contenu affiché dans ladite au moins une zone, indépendamment d'une action sur une interface utilisateur dudit terminal : par exemple, il est possible, au moyen de la sonde d'activité système, de détecter que la zone considérée affiche actuellement une vidéo en cours de lecture ou un gif animé (état changeant) ou au contraire une image ou un texte au format PDF (état fixe) ;
- des informations CC4 représentatives d'au moins une interaction ou d'une absence d'interaction avec au moins un contenu affiché dans ladite au moins une zone : par exemple, il peut être possible, au moyen de la sonde de scrutation des périphériques d'entrée, de détecter que l'utilisateur est passif vis-à-vis de la zone considérée ou au contraire qu'il effectue de nombreuses actions dans cette zone ;
- des informations CC5 représentatives d'au moins un type d'interaction effectué sur ladite au moins une zone : par exemple, il peut être possible, au moyen de la sonde de scrutation des périphériques d'entrée, de détecter que l'utilisateur a cliqué via un dispositif de pointage dans la zone considérée, de déterminer la nature d'au moins un mouvement - par exemple continu *versus* saccadé - d'un pointeur associé au dispositif de pointage au sein de la zone, ou encore d'identifier que du texte est saisi dans la zone au moyen d'un clavier.

La liste de caractéristiques contextuelles CC1 à CC5 précédente n'est pas limitative, et d'autres caractéristiques contextuelles sont susceptibles d'être obtenues en étape 11, y compris par d'autres biais que les sondes précédemment décrites (par exemple en provenance de systèmes tiers, ou obtenus au sein de structures de données variées). Différents niveaux de granularité peuvent également être envisagés pour les caractéristiques contextuelles, avec notamment un découpage plus fin que celui présenté précédemment en relation avec les caractéristiques contextuelles CC1 à CC5 : par exemple, la caractéristique contextuelle CC5 donnée à titre illustratif ci-dessus peut être remplacée par une pluralité de caractéristiques contextuelles plus ciblées, e.g. une première caractéristique contextuelle associée à une détection de clics via un dispositif de pointage dans la zone, une deuxième caractéristique contextuelle associée à la nature du mouvement d'un pointeur associé au dispositif de pointage dans la zone, une troisième caractéristique contextuelle associée aux saisies claviers dans la zone, etc.

Dans une étape 12, le dispositif électronique détermine la valeur d'au moins un indicateur d'activité pour la zone considérée, en fonction des caractéristiques contextuelles associées à la zone, préalablement obtenues en étape 11.

Selon la technique proposée, un indicateur d'activité est un indicateur permettant de caractériser une activité d'au moins un utilisateur vis-à-vis d'une zone considérée de l'écran du terminal électronique, à un instant donné ou pendant un intervalle temporel donné.

De tels indicateurs d'activité peuvent notamment comprendre, dans certains modes de réalisation :

- un indicateur de productivité IA1 au sein de la zone considérée, représentatif d'un niveau de production de contenu au sein de cette zone ;
- un indicateur d'attention IA2 pour la zone considérée, représentatif d'un niveau d'intérêt (ou d'attention) vis-à-vis d'un contenu affiché dans cette zone ;
- un indicateur de complexité IA3 de la zone considérée, représentatif d'un niveau d'incompréhension, de difficulté rencontrée, et/ou de confusion vis-à-vis d'un contenu affiché dans cette zone ;
- un indicateur d'introspection IA4 associé à la zone considérée, représentatif d'un niveau de fatigue et/ou de réflexion vis-à-vis d'un contenu affiché dans cette zone.

Bien entendu, la liste d'indicateurs d'activité IA1 à IA4 précédente n'est pas limitative, et d'autres type d'indicateurs d'activité sont susceptibles d'être déterminés en étape 12.

On présente maintenant un exemple de calcul de la valeur d'un indicateur d'activité, dans certains modes de réalisation de la technique proposée, tenant compte d'au moins certaines des caractéristiques contextuelles obtenues en étape 11.

Dans un premier temps, un score (par exemple de 0 à 5) est attribué aux caractéristiques contextuelles obtenues en étape 11, selon un ensemble de règles. Par exemple :

- le score S_CC1 attribué à la caractéristique contextuelle CC1 est d'autant plus grand (i.e. proche de 5 par exemple) que le temps ou le nombre de fois où le regard se porte sur la zone considérée est important, et inversement ;
- le score S_CC2 attribué à la caractéristique contextuelle CC2 tient compte des possibilités d'interaction de l'utilisateur en fonction du type d'application dont un rendu est couramment (actuellement) présent dans la zone considérée : une application d'édition de texte a par exemple un score de 5, une application de visionnage photo ou vidéo un score de 1, si aucun rendu d'application n'est effectué dans la zone le score est de 0 (cas d'une zone uniquement occupée par un fond d'écran par exemple), etc. ;
- le score S_CC3 attribué à la caractéristique contextuelle CC3 est par exemple de 1 si le contenu est fixe et de 4 si le contenu est changeant (indépendamment de toute action de l'utilisateur) ;
- le score S_CC4 attribué à la caractéristique contextuelle CC4 est par exemple noté entre 1 et 5 selon le degré d'activité de l'utilisateur dans la zone, et de 0 si l'utilisateur est complètement passif et n'interagit pas du tout avec la zone ;
- le score S_CC5 attribué à la caractéristique contextuelle CC5 tient compte de la nature des interactions de l'utilisateur avec la zone considérée : par exemple, une saisie au clavier est associée à la note de 5, tandis qu'une simple action défilement (« scroll ») est associé à la note de 1.

Dans certains modes de réalisation, dans un deuxième temps, les scores associés aux caractéristiques contextuelles peuvent être pondérés, par exemple par des coefficients de pondération (par exemple des nombres réels ou entiers relatifs ou naturels, comme des entiers naturels de valeurs comprises entre 0 et 5) propres au type d'indicateur d'activité considéré. En d'autres termes, à un type d'indicateur d'activité peut être associé un jeu de coefficients de pondération, ces coefficients de pondération visant à donner plus ou moins d'importance aux différentes caractéristiques contextuelles, en cohérence avec le type d'indicateur d'activité considéré. Le jeu de coefficients de pondération associé à l'indicateur de productivité IA1 peut par exemple être défini de la manière suivante :

- coefficient 3 pour la caractéristique contextuelle CC1 (le temps passé sur une zone peut être associé à un niveau de concentration et d'attention en lien avec une création de contenu et donc avec une productivité) ;

- coefficient 5 pour la caractéristique contextuelle CC2 (le type d'application associé à la zone peut être considéré comme de grande importance lorsqu'il s'agit d'estimer la productivité de l'utilisateur sur la zone) ;
- coefficient 1 pour la caractéristique contextuelle CC3 (l'état fixe ou changeant du contenu affiché dans la zone - lorsque l'utilisateur n'interagit pas avec la zone - peut être considéré comme de peu d'importance pour estimer la productivité de l'utilisateur sur la zone) ;
- coefficient 2 pour la caractéristique contextuelle CC4 (le degré d'interaction de l'utilisateur sur la zone peut refléter un certain niveau de productivité) ;
- coefficient 5 pour la caractéristique contextuelle CC5 (la détection de changement dans la zone, qui résulte directement d'interactions de l'utilisateur avec cette zone, peut être considéré comme ayant un impact fort sur la productivité).

Bien entendu, les jeux de coefficients de pondération peuvent varier selon les indicateurs d'activité. Par exemple, des jeux de coefficients de pondération différents seront associés aux indicateurs d'activité IA2, IA3 et IA4 précédemment introduits. Par exemple, une caractéristique contextuelle associée au type de mouvement d'un pointeur (continu vs saccadé) dans la zone considérée pourra se voir attribuer un fort coefficient de pondération pour le calcul de l'indicateur d'attention IA2. En effet, un mouvement continu peut souvent être associé à une activité de lecture d'informations à l'écran par l'utilisateur, tandis qu'un mouvement saccadé peut être révélateur d'une recherche du pointeur à l'écran et donc d'une activité transitoire parfois associée à une baisse d'attention de l'utilisateur. Un coefficient de pondération plus faible pourra être attribué à la caractéristique contextuelle associée au type de mouvement d'un pointeur (continu vs saccadé) dans la zone considérée pour le calcul de l'indicateur de productivité IA1.

Dans certains modes de réalisation, dans un troisième temps, la valeur de l'indicateur d'activité pour la zone considérée peut être obtenue en additionnant les scores pondérés associés aux caractéristiques contextuelles dont dépend l'indicateur d'activité.

Par exemple, en reprenant l'exemple précédent, la valeur associée à l'indicateur de productivité peut être donnée par la formule suivante :

$$IA1 = (3 \times SC\_CC1) + (5 \times SC\_CC2) + (1 \times SC\_CC3) + (2 \times SC\_CC4) + (5 \times SC\_CC1)$$

Dans certains modes de réalisation, la valeur d'un indicateur d'activité peut être normalisée, par exemple en la divisant par la somme des coefficients de pondération associés à l'indicateur d'activité de manière à obtenir une moyenne pondérée (comprise entre 0 et 5 dans le cas de l'exemple précédent), ou encore en la divisant par la valeur maximale atteignable par un indicateur d'activité (de manière à obtenir une valeur normalisée comprise entre 0 et 1).

Dans au moins certains modes de réalisation, les valeurs des différents indicateurs d'activité associés à une zone sont potentiellement mises à jour à plusieurs reprises au cours d'une session d'utilisation du terminal électronique par l'utilisateur. Par exemple, ces valeurs peuvent être recalculées de manière répétée, à intervalles de temps réguliers ou non. De manière alternative ou complémentaire, les valeurs des indicateurs d'activité associés à une zone sont mises à jour à détection de certains évènements par au moins une des sondes précédemment décrites, dont notamment :

- une ouverture, une fermeture, un redimensionnement et/ou un déplacement d'au moins une fenêtre applicative impactant la zone considérée ;
- une durée durant laquelle le regard est dirigé vers la zone considérée pendant un premier intervalle de temps de durée non nulle ;
- un nombre de retour du regard vers la zone considérée pendant un deuxième intervalle de temps de durée non nulle.

Par exemple, la mise à jour des indicateurs d'activité associé à une zone peut être effectuée si au moins une sonde de détection de la direction de regard détecte que l'utilisateur a porté son regard plus de 3 minutes sur cette zone et est y revenu plus de 4 fois pendant les 5 dernières minutes.

Dans au moins certains modes de réalisation de la technique proposée, la mise à jour d'une zone suite à la détection d'un évènement en relation avec cette zone peut déclencher un nouveau calcul (i.e. une mise à jour) d'au moins certains (par exemple tous) des indicateurs d'activité associés à au moins certaines autres (par exemple toutes) des zones de l'écran du terminal électronique (y compris celles *a priori* non concernées par l'évènement détecté).

Dans certains modes de réalisation, une valeur d'indicateur d'activité calculée peut être stockée au sein d'une structure de données, permettant ainsi par exemple de constituer un historique des indicateurs d'activité associés à chaque zone. Selon certains modes de réalisation, les indicateurs d'activité peuvent être regroupés par type d'application et/ou par fichier dans cette structure de données ou dans une autre structure de données, en fonction du contenu d'une fenêtre applicative affichée au moins partiellement dans la zone au moment où les indicateurs d'activité sont calculés (par type d'application, on entend la nature ou le nom de l'application, par exemple « tableur » ou « Microsoft Excel » ;

par fichier on entend le nom du document particulier que l'utilisateur consulte ou crée dans cette application, par exemple « mon_fichier.xls »). Si plusieurs fenêtres applicatives sont affichées au moins partiellement dans la zone considérée, la fenêtre applicative occupant la plus grande surface de la zone en question est par exemple retenue pour le regroupement. Un indicateur d'activité est ainsi associé à une application ou un fichier dans une structure de données, ce qui permet de constituer, pour une application ou un fichier, un historique de valeurs d'indicateurs d'activité. Il est ainsi possible de retrouver l'historique de tous les indicateurs d'activité associés à un fichier lors de sa réouverture, ou encore par exemple de rechercher tous les fichiers associés ou ayant été associés à un indicateur d'attention de valeur élevée (i.e. qui ont fait l'objet à au moins un moment d'un intérêt particulier de la part de l'utilisateur).

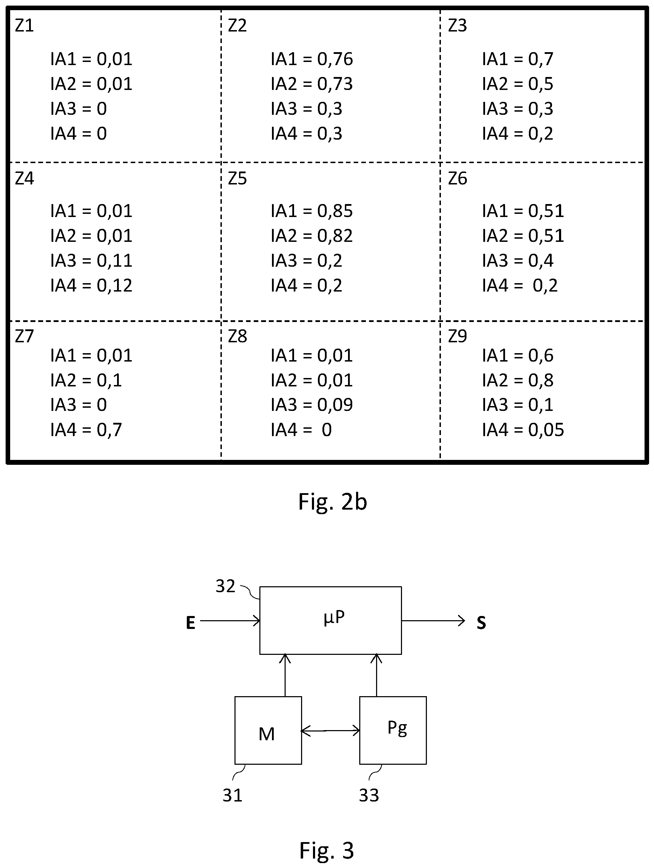

Par ce mécanisme, on obtient ainsi une cartographie multi-niveaux (par zone d'affichage, par type d'application, par fichier) des indicateurs d'activité et de leur évolution dans le temps (i.e. un historique), formant ainsi un socle exploitable par des services tiers ou internes en surcouche, par exemple à des fins de statistiques ou pour proposer des services innovants tels que des assistants intelligents. La figure 2b illustre à ce titre (avec des valeurs arbitraires uniquement choisie à des fins d'illustration) un premier niveau de cartographie qui montre, à un instant donné, les valeurs de différents indicateurs d'activité pour les 9 zones d'affichage telles que définies dans l'exemple de la figure 2a, dans une représentation qui peut être qualifiée de matricielle.

Les applications possibles d'une telle une cartographie sont multiples. Par exemple :

- si les indicateurs de productivité associés à une zone ou à plusieurs zones adjacentes sont élevés, et que l'ouverture d'une fenêtre liée à une application de type messagerie est détectée dans au moins une autre zone de l'écran (différente de cette zone ou de ces zones adjacentes), un service en surcouche peut suggérer à l'utilisateur de masquer cette nouvelle fenêtre (ou la masquer ou l'estomper automatiquement, par exemple par adaptation des couleurs et/ou du contraste). Cette action peut notamment être effectuée lorsque l'historique de l'indicateur de productivité de l'utilisateur montre que les activités de messagerie impactent fortement sa productivité ;
- si les indicateurs d'attention et de complexité associés à une zone ou à plusieurs zones adjacentes sont élevés, un service en surcouche peut proposer à l'utilisateur de l'assister pour effectuer une tâche, en lui donnant par exemple accès à des tutoriels appropriés (en fonction du type d'application détecté dans les zones considérées, de problématiques éventuellement identifiées automatiquement par des techniques de reconnaissance de caractères OCR sur les zones considérées, etc.) ;
- si l'attention de l'utilisateur est détournée d'une application où il consomme du contenu (vidéo, podcast, animation, etc.) qui avait toute son attention au préalable (chute brutale de l'indicateur d'attention d'une zone, au profit d'une autre zone), un service en surcouche peut proposer de mettre ce contenu automatiquement en pause, ou d'enregistrer ce contenu pour pouvoir le rejouer plus tard si l'utilisateur veut reprendre là où son attention avait été détourné.

Ces exemples sont bien entendu donnés à titre purement illustratif et non limitatif.

Selon un autre aspect, la technique proposée se rapporte également à dispositif électronique apte à mettre en œuvre le procédé précédemment décrit dans l'un quelconque de ses modes de réalisation. Plus particulièrement, le dispositif électronique selon la présente technique comprend :

- des moyen d'obtention d'un ensemble de caractéristiques contextuelles associées à au moins une zone parmi une pluralité de zones d'affichage d'au moins un écran d'un terminal électronique, en fonction de données d'utilisation dudit terminal comprenant des données relatives à une direction de regard, des données relatives à une activité système dudit terminal et/ou des données fournies en entrée dudit terminal ;
- des moyens de détermination d'au moins un indicateur d'activité sur ladite zone, en fonction desdites caractéristiques contextuelles associées à ladite zone.

La figure 3 représente, de manière schématique et simplifiée, la structure d'un tel dispositif électronique, dans un mode de réalisation particulier. Selon une première implémentation, ce dispositif électronique peut être intégré dans, ou confondu avec, le terminal électronique (e.g. l'ordinateur, la tablette, le smartphone, etc.) de l'utilisateur dont on souhaite analyser l'activité. Selon une deuxième implémentation, ce dispositif électronique est intégré dans, ou confondu avec, un autre dispositif qui coopère avec le terminal électronique de l'utilisateur (cet autre dispositif est par exemple une passerelle domestique, aussi appelée « box Internet »). Le terminal électronique comprend par ailleurs au moins un écran (éventuellement plusieurs, par exemple dans le cas d'une configuration d'affichage étendu), qui peut être directement intégré au terminal, ou connecté de manière filaire ou sans fil au terminal.

Le dispositif électronique selon la technique proposée comprend par exemple une mémoire 31 constituée d'une mémoire tampon M, une unité de traitement 32, équipée par exemple d'un microprocesseur μP, et pilotée par le programme d'ordinateur Pg 33, mettant en œuvre le procédé d'analyse selon l'invention.

À l'initialisation, les instructions de code du programme d'ordinateur 33 sont chargées dans la mémoire tampon avant d'être exécutées par le processeur de l'unité de traitement 32. L'unité de traitement 32 reçoit en entrée E par exemple des données d'utilisation en provenance par exemple de diverses sondes logicielles et/ou matérielles qui peuvent être intégrées dans le dispositif électronique lui-même et/ou dans le terminal électronique de l'utilisateur (e.g. sonde de détection d'une direction de regard, sonde d'analyse de l'activité système du terminal, sonde de scrutation d'au moins un périphérique d'entrée associé au terminal, etc.). Ces données évoluent au cours du temps, en fonction de l'activité de l'utilisateur sur son terminal électronique.

Le microprocesseur de l'unité de traitement 32 réalise alors les étapes du procédé de configuration automatique, selon les instructions du programme d'ordinateur 33, pour délivrer en sortie S un ensemble d'indicateurs d'activité associés à différentes zones d'affichage de l'écran du dispositif électronique. Plus particulièrement, le microprocesseur 32 obtient un ensemble de caractéristiques contextuelles associées à au moins une zone parmi une pluralité de zones d'affichage d'au moins un écran du terminal électronique, à partir des données d'utilisation reçues en entrée E, puis il détermine sur la base de ces caractéristiques au moins un indicateur d'activité associé à la zone considérée. Le dispositif électronique comprend également diverses interfaces de communication (non représentées), lui permettant par exemple de communiquer avec différents capteurs et/ou périphériques (e.g. caméra, périphérique d'entrée de type clavier ou souris, etc.) pour la mise en œuvre des sondes logicielles et/ou matérielles précitées, ou encore de mettre les indicateurs d'activité déterminés à disposition d'un ou plusieurs services internes ou externes au terminal électronique de l'utilisateur, afin qu'ils soient exploités pour la mise en œuvre de solutions transverses de type assistant intelligent par exemple.

**Revendications**

1. Procédé d'analyse d'une activité d'un terminal électronique, ledit procédé comprenant :

   - obtention (11) de caractéristiques contextuelles (CC1, CC2, CC3, CC4, CC5) associées à au moins une fenêtre applicative parmi une pluralité de fenêtres applicatives d'une pluralité d'applications affichées sur au moins un écran dudit terminal électronique, en fonction de données d'utilisation dudit terminal comprenant des données relatives à une direction de regard, des données relatives à une activité système dudit terminal et/ou des données fournies en entrée dudit terminal via au moins une interface utilisateur associée audit terminal ;
   - détermination (12) d'au moins un indicateur d'activité (IA1, IA2, IA3, IA4) sur ladite fenêtre applicative, en fonction desdites caractéristiques contextuelles associées à ladite fenêtre applicative.

2. Procédé selon la revendication 1, **caractérisé en ce que** lesdites données d'utilisation du terminal sont délivrées par des sondes logicielles et/ou matérielles (SND) comprenant au moins une sonde de détection d'une direction de regard, une sonde d'analyse de l'activité système dudit terminal, et/ou une sonde de scrutation d'au moins un périphérique d'entrée associé audit terminal.

3. Procédé selon la revendication 1, **caractérisé en ce que** lesdites caractéristiques contextuelles associées à la fenêtre applicative appartiennent au groupe comprenant :

   - des informations relatives à une durée pendant laquelle un regard est dirigé vers ladite fenêtre applicative ;
   - des informations relatives à un nombre de fois où le regard est dirigé vers ladite fenêtre applicative ;
   - des informations relatives à un type d'application associé à une fenêtre applicative affichée au moins partiellement dans ladite fenêtre applicative ;
   - des informations représentatives d'un état fixe ou changeant d'un contenu affiché dans ladite fenêtre applicative, indépendamment d'une action sur une interface utilisateur dudit terminal ;
   - des informations représentatives d'une interaction ou d'une absence d'interaction avec un contenu affiché dans ladite fenêtre applicative ;
   - des informations représentatives d'un type d'interaction effectué sur ladite fenêtre applicative.

4. Procédé selon la revendication 1, **caractérisé en ce que** ledit au moins un indicateur d'activité comprend au moins :

   - un indicateur de productivité au sein de ladite fenêtre applicative, représentatif d'un niveau de production de contenu au sein de ladite fenêtre applicative, calculé en fonction desdites caractéristiques contextuelles associées à ladite fenêtre applicative ;
   - un indicateur d'attention pour ladite fenêtre applicative, représentatif d'un niveau d'intérêt vis-à-vis d'un contenu affiché dans ladite fenêtre applicative, calculé en fonction desdites caractéristiques contextuelles associées à ladite fenêtre applicative ;
   - un indicateur de complexité de ladite fenêtre applicative, représentatif d'un niveau d'incompréhension, de difficulté rencontrée, et/ou de confusion vis-à-vis d'un contenu affiché dans ladite fenêtre applicative, calculé en fonction desdites caractéristiques contextuelles associées à ladite fenêtre applicative ;
- un indicateur d'introspection associé à ladite fenêtre applicative, représentatif d'un niveau de fatigue et/ou de réflexion vis-à-vis d'un contenu affiché dans ladite fenêtre applicative, calculé en fonction desdites caractéristiques contextuelles associées à ladite fenêtre applicative.

**5.** Procédé selon la revendication 1, **caractérisé en ce que** la détermination d'un indicateur d'activité comprend :

- l'attribution de scores auxdites caractéristiques contextuelles, en fonction desdites données d'utilisation ;
- l'obtention d'un jeu de coefficients de pondération associés auxdits scores, en fonction dudit indicateur d'activité ;
- le calcul d'une valeur associée audit indicateur d'activité, en fonction desdits scores et dudit jeu de coefficients de pondération.

**6.** Procédé selon la revendication 1, **caractérisé en ce que** la détermination d'au moins un indicateur d'activité est mise en œuvre suite à la détection d'au moins un évènement appartenant au groupe comprenant :

- une ouverture, une fermeture, un redimensionnement et/ou un déplacement de ladite fenêtre applicative;
- une durée durant laquelle le regard est dirigé vers ladite fenêtre applicative pendant un premier intervalle de temps ;
- un nombre de retour du regard vers ladite fenêtre applicative pendant un deuxième intervalle de temps.

**7.** Procédé selon la revendication 1, **caractérisé en ce que** ledit au moins un indicateur d'activité déterminé pour ladite fenêtre applicative est stocké au sein d'une structure de donnée, pour obtenir un historique dudit indicateur d'activité associé à ladite fenêtre applicative.

**8.** Procédé selon la revendication 7, **caractérisé en ce que** ledit au moins un indicateur d'activité déterminé est en outre associé, dans ladite structure de données ou dans une autre structure de données, à un type d'application et/ou à un fichier correspondant au contenu de ladite fenêtre applicative affichée au moins partiellement au moment de ladite détermination.

**9.** Procédé selon la revendication 1, **caractérisé en ce qu'**il est mis en œuvre pour une pluralité de fenêtres applicatives parmi les fenêtres applicatives affichées sur ledit au moins un écran.

**10.** Dispositif électronique d'analyse d'une activité d'un terminal électronique, ledit dispositif comprenant :

- des moyen d'obtention de caractéristiques contextuelles associées à au moins une fenêtre applicative parmi une pluralité de fenêtres applicatives d'une pluralité d'applications affichées sur au moins un écran dudit terminal électronique, en fonction de données d'utilisation dudit terminal comprenant des données relatives à une direction de regard, des données relatives à une activité système dudit terminal et/ou des données fournies en entrée dudit terminal via au moins une interface utilisateur associée audit terminal ;
- des moyens de détermination d'au moins un indicateur d'activité sur ladite fenêtre applicative, en fonction desdites caractéristiques contextuelles associées à ladite fenêtre applicative.

**11.** Dispositif selon la revendication 10, **caractérisé en ce que** lesdites caractéristiques contextuelles associées à la fenêtre applicative appartiennent au groupe comprenant :

- des informations relatives à une durée pendant laquelle un regard est dirigé vers ladite fenêtre applicative ;
- des informations relatives à un nombre de fois où le regard est dirigé vers ladite fenêtre applicative ;
- des informations relatives à un type d'application associé à une fenêtre applicative affichée au moins partiellement dans ladite fenêtre applicative ;
- des informations représentatives d'un état fixe ou changeant d'un contenu affiché dans ladite fenêtre applicative, indépendamment d'une action sur une interface utilisateur dudit terminal ;
- des informations représentatives d'une interaction ou d'une absence d'interaction avec un contenu affiché dans ladite fenêtre applicative ;
- des informations représentatives d'un type d'interaction effectué sur ladite fenêtre applicative.

**12.** Dispositif selon la revendication 10, **caractérisé en ce que** ledit au moins un indicateur d'activité comprend au moins :

- un indicateur de productivité au sein de ladite fenêtre applicative, représentatif d'un niveau de production de contenu au sein de ladite fenêtre applicative, calculé en fonction desdites caractéristiques contextuelles associées à ladite fenêtre applicative ;
- un indicateur d'attention pour ladite fenêtre applicative, représentatif d'un niveau d'intérêt vis-à-vis d'un contenu affiché dans ladite fenêtre applicative, calculé en fonction desdites caractéristiques contextuelles associées à ladite fenêtre applicative ;
- un indicateur de complexité de ladite fenêtre applicative, représentatif d'un niveau d'incompréhension, de difficulté rencontrée, et/ou de confusion vis-à-vis d'un contenu affiché dans ladite fenêtre applicative, calculé en fonction desdites caractéristiques contextuelles associées à ladite fenêtre applicative ;
- un indicateur d'introspection associé à ladite fenêtre applicative, représentatif d'un niveau de fatigue et/ou de réflexion vis-à-vis d'un contenu affiché dans ladite fenêtre applicative, calculé en fonction desdites caractéristiques contextuelles associées à ladite fenêtre applicative.

**13.** Dispositif selon la revendication 10, **caractérisé en ce qu'**il comprend des moyens de détection d'au moins un évènement appartenant au groupe comprenant :

- une ouverture, une fermeture, un redimensionnement et/ou un déplacement de ladite fenêtre applicative ;
- une durée durant laquelle le regard est dirigé vers ladite fenêtre applicative pendant un premier intervalle de temps ;
- un nombre de retour du regard vers ladite fenêtre applicative pendant un deuxième intervalle de temps ;

et **en ce que** lesdits moyens de détermination d'au moins un indicateur d'activité sont mis en œuvre à détection d'au moins un évènement appartenant audit groupe.

**14.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'analyse d'une activité d'un terminal électronique selon l'une quelconque des revendications 1 à 9, lorsqu'il est exécuté sur un ordinateur.

**15.** Support d'enregistrement lisible par ordinateur comprenant des instructions de code de programme qui, lorsqu'elles sont exécutées par un ordinateur, conduisent celui-ci à mettre en œuvre le procédé d'analyse d'une activité d'un terminal électronique selon l'une quelconque des revendications 1 à 9.

Fig. 1

Fig. 2a

| Z1 | Z2 | Z3 |
|---|---|---|
| IA1 = 0,01 | IA1 = 0,76 | IA1 = 0,7 |
| IA2 = 0,01 | IA2 = 0,73 | IA2 = 0,5 |
| IA3 = 0 | IA3 = 0,3 | IA3 = 0,3 |
| IA4 = 0 | IA4 = 0,3 | IA4 = 0,2 |
| **Z4** | **Z5** | **Z6** |
| IA1 = 0,01 | IA1 = 0,85 | IA1 = 0,51 |
| IA2 = 0,01 | IA2 = 0,82 | IA2 = 0,51 |
| IA3 = 0,11 | IA3 = 0,2 | IA3 = 0,4 |
| IA4 = 0,12 | IA4 = 0,2 | IA4 = 0,2 |
| **Z7** | **Z8** | **Z9** |
| IA1 = 0,01 | IA1 = 0,01 | IA1 = 0,6 |
| IA2 = 0,1 | IA2 = 0,01 | IA2 = 0,8 |
| IA3 = 0 | IA3 = 0,09 | IA3 = 0,1 |
| IA4 = 0,7 | IA4 = 0 | IA4 = 0,05 |

Fig. 2b

Fig. 3

Europäisches
Patentamt

European
Patent Office

Office européen
des brevets

# RAPPORT DE RECHERCHE EUROPEENNE

Numéro de la demande

EP 22 19 3237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/131850 A1 (QVARFORDT PERNILLA [US]) 14 mai 2015 (2015-05-14) * alinéas [0002] – [0004], [0009], [0012], [0017], [0020] – [0031], [0042] – [0155]; figures 1-8D * ----- | 1-15 | INV. G06F3/01 G06F3/04842 G06F3/04895 |
| X | US 2017/293407 A1 (TODASCO MICHAEL CHARLES [US]) 12 octobre 2017 (2017-10-12) * alinéas [0010] – [0068]; figures 1-4 * ----- | 1-15 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| La Haye | 3 janvier 2023 | Arranz, José |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 22 19 3237**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**03-01-2023**

| Document brevet cité au rapport de recherche | Date de publication | Membre(s) de la famille de brevet(s) | Date de publication |
|---|---|---|---|
| US 2015131850 A1 | 14-05-2015 | JP 6409507 B2 | 24-10-2018 |
| | | JP 2015095260 A | 18-05-2015 |
| | | US 2015131850 A1 | 14-05-2015 |
| | | US 2016132752 A1 | 12-05-2016 |
| US 2017293407 A1 | 12-10-2017 | AUCUN | |

EPO FORM P0460

Pour tout renseignement concernant cette annexe : voir Journal Officiel de l'Office européen des brevets, No.12/82